# EUROPEAN PATENT SPECIFICATION

(11) **EP 1 188 246 B1**
(45) Date of publication and mention of the grant of the patent: **11.03.2009**
(21) Application number: 00935875.5
(22) Date of filing: 05.05.2000
(51) Int. Cl.: H04B 1/38

(54) **Reprogrammable digital wireless communication device and method of operating same**
Reprogrammierbare digitale drahtlose Vorrichtung und Verfahren zur Nutzung derselben
Dispositif de communication numérique sans fil reprogrammable et procédé de fonctionnement

(30) Priority: 07.05.1999 US 133129 P; 07.05.1999 US 133135 P; 07.05.1999 US 133137 P; 07.05.1999 US 133141 P
(43) Date of publication of application: 20.03.2002
(60) Divisional application: 06016938.0
(73) Proprietor: Infineon Technologies AG, 81669 München (DE)
(72) Inventor: SUBRAMANIAN, Ravi, Mountain View, CA 94040 (US)
(74) Representative: Zinkler, Franz
(86) International application number: PCT/US2000/012473
(87) International publication number: WO 2000/069084

(56) References cited:
- US-A- 5 539 479
- US-A- 5 872 810
- RABAEY J M: "Reconfigurable processing: the solution to low-power programmable DSP" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 1, 21 April 1997 (1997-04-21), pages 275-278, XP010226188 ISBN: 0-8186-7919-0
- TUTTLEBEE W: "Software radio-impacts and implications" SPREAD SPECTRUM TECHNIQUES AND APPLICATIONS, 1998. PROCEEDINGS., 1998 IEEE 5TH INTERNATIONAL SYMPOSIUM ON SUN CITY, SOUTH AFRICA 2-4 SEPT. 1998, NEW YORK, NY, USA,IEEE, US, vol. 2, 2 September 1998 (1998-09-02), pages 541-545, XP010307620 ISBN: 0-7803-4281-X

## Description

### BRIEF DESCRIPTION OF THE INVENTION

This invention relates generally to wireless communication devices. More particularly, this invention relates to a reconfigurable digital wireless communication device.

### BACKGROUND OF THE INVENTION

Existing communication devices are "static" devices. That is, they are designed to support a specific wireless communication standard and/or to support a specific application (e.g., voice, data transmission) at a specific data rate. Typically, different wireless communication standards are used in different wireless networks, both within a geographic locality and worldwide. Thus, an individual traveling between different regions is required to use a separate wireless communication device in each region.

In addition, the advent of new and evolving user applications and services may necessitate redesign of static wireless communication infrastructure and terminals. Thus, an individual or service provider who wants to utilize or enable such services is required to replace or upgrade equipment.

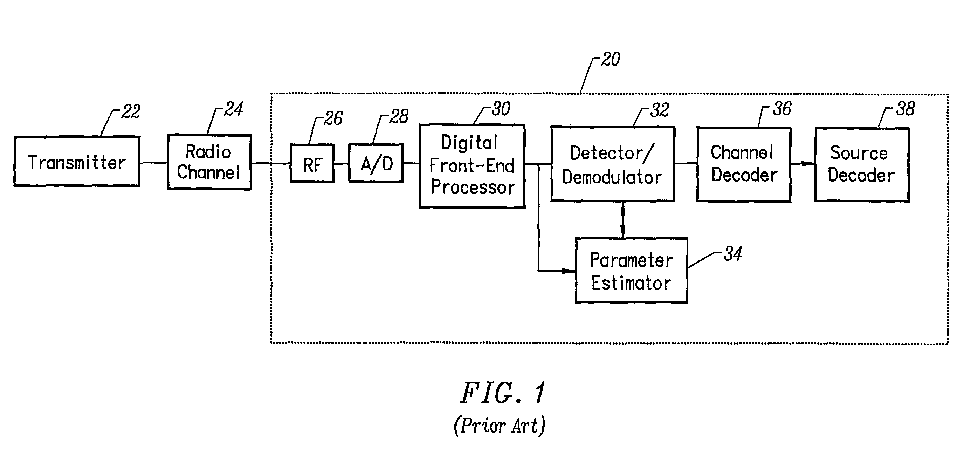

Figure 1 illustrates a digital communication modem 20 that may be implemented in accordance with prior art approaches to multi-standard communication devices. A transmitter 22 transmits a signal to a channel 24, which may be a wireless or physical channel. The transmitted signal is received at the modem 20, where it is initially processed by a Radio Frequency (RF) subsystem 26. The RF subsystem 26 performs analog mixing, analog filtering, and analog gain control functions. The analog signal from the RF subsystem 26 is then converted to an equivalent digital signal by an analog-to-digital converter 28.

The digital signal is then processed by a digital front-end processing circuit 30, which performs standard-specific, channel-specific, and modulation-specific bandwidth selection, filtering, sampling-rate control and other signal processing. The signal from the digital front-end processing circuit 30 is then passed to a detector/demodulator circuit 32, which performs signal detection and demodulation operations. The detection and demodulation circuit 32 also interacts with a parameter estimation circuit 34. The output from the detection and demodulation circuit 32 is subsequently processed by a channel decoder 36 and then a source decoder 38.

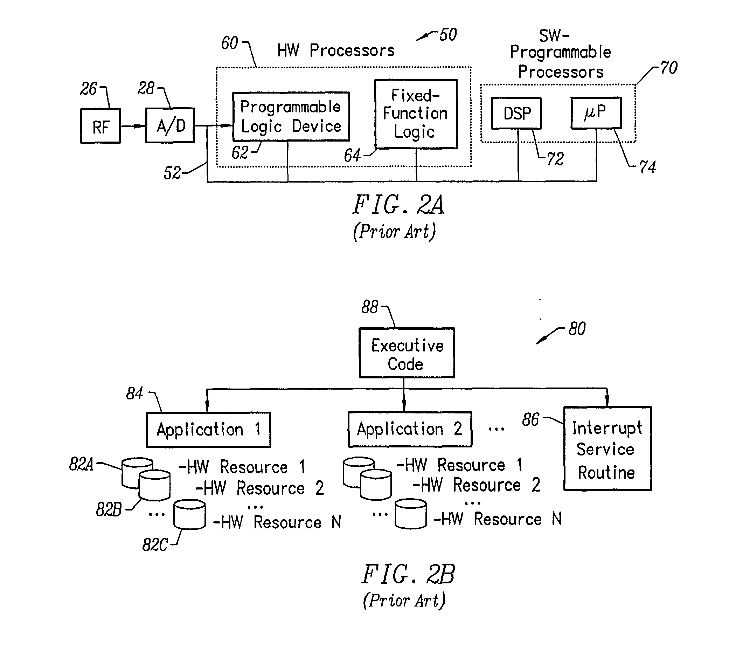

Figure 2A shows a prior art architecture for implementing the structure of Figure 1. An RF subsystem 26 is again used to provide one or more bandpass signals (intermediate frequency signals), which are then digitized by the analog-to-digital converter 28, which is typically implemented as a free-running analog-to-digital converter. The output from the analog-to-digital converter 28 is placed on a bus 52. Signals from the bus 52 are routed to hardware processors 60 and software programmable processors 70. The hardware processors include programmable logic device 62 and fixed-function logic 64. The software programmable processors include digital signal processor 72 and microprocessor 74.

The digital components (30, 32, 34, 36, and 38) of the device 20 are typically implemented on software-programmable processors 70, or as a fully hardwired, non-programmable application-specific integrated circuit 64. The hardwired circuit may be augmented by a programmable logic device 62, which provides limited fine-granularity programmability. The device 50 of Figure 2A facilitates the management of functions executing on the programmable logic device 62 via controlling the download of functionality into the programmable logic device 62 and control of the dataflow into and out of the programmable logic device 62. The software-programmable processors 70 typically comprises a digital signal processor 72 and a control microprocessor 74. For lower bandwidth applications (tens of kbps), software-programmable digital signal processors 72 are typically used to perform requisite signal processing functions. For high bandwidth applications (tens of Mbps), a fully hardwired approach is typically employed. The general purpose microprocessor 74 typically performs control and other functions. Accordingly, the signal processing device 50 can be highly optimized only for a particular communication standard, service and application. Prior art approaches to accommodating multiple standards, services and applications have essentially consisted of combining the disparate hardware and software resources separately optimized for each service of interest. This results in poor efficiency in terms of size, weight and power consumption.

Figure 2B illustrates the control architecture 80 for a prior art multi-standard communication apparatus. The architecture 80 includes executive code 88, which is effectively an operating system running on microprocessor 74 or digital signal processor 72. One of a suite of applications 84 is selected to run under the operating system. Each application 84 executes a set of software/hardware functions 82A-C. Each application 84 requires computation resources, which are available according to Figure 2A, either via a microprocessor, a digital signal processor, a fixed-function logic engine, or a programmable logic engine. Thus, each of the applications requires some combination of these resources; the actual partitioning among their use is determined by the product/application requirements. For example, operation on a portable device favors much of the functionality being implemented on dedicated, fixed-function hardwired logic devices. On the other hand, product flexibility and upgrade-ability requires use of completely programmable components in the platform, such as microprocessors, digital signal processors, and programmable logic. The approach of Figure 2B is also inefficient, as it essentially relies upon sequentially selecting one of the sets of disparate and redundant hardware and software resources discussed in connection with Figure 2A.

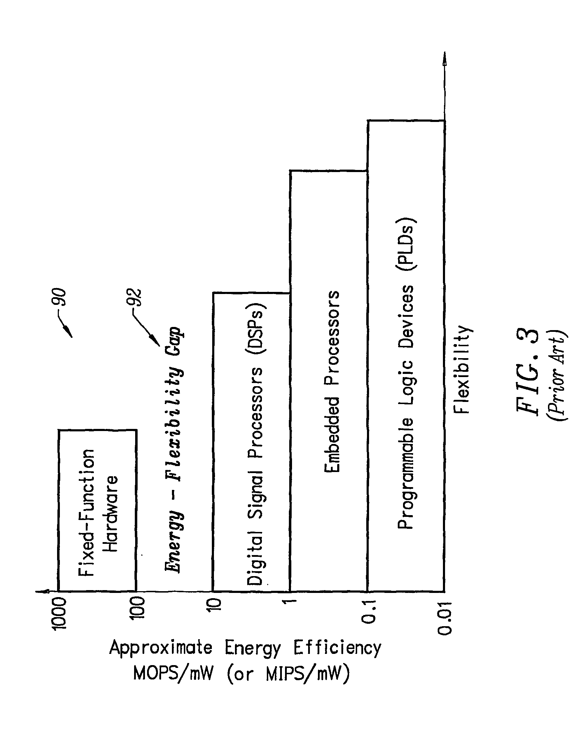

The poor efficiency of the prior art approaches discussed is evident from Figure 3, which depicts energy efficiency vs. flexibility for the various architectural elements of device 50. The highly efficient fixed-hardware resources are highly inflexible, so that considerable replication (and therefore redundancy) is incurred. At the opposite extreme, the highly flexible programmable logic devices, embedded processors and software-programmable digital signal processors (DSPs) that may be employed are inefficient with respect to power and size. These design tradeoffs result in the Energy-Effciency Gap 92 shown in Figure 3.

The publication by Rabaey, J.M. "Reconfigurable processing: the solution to low-power programmable DSP", Acoustics, Speech and signal Processing 1997, ICASSP-97, IEEE Conference on Munich, Germany, 21-24 April 1997, describes a multi-granularity architecture template that can be used to implement a domain-specific processor instance and that can be programmed to implement a variety of algorithms within a given domain of interest. The architecture is centered around a reconfigurable communication network. Communication and computation activities are coordinated via a distributed data-driven control mechanism. Connected to the network are an array of heterogeneous, autonomous processing elements, called satellite processors. These could fall into any of the reconfigurable classes: A general microprocessor core (most of the time only one of these is sufficient), a dedicated functional module such as a multiply-accumulator or a DCT unit, an embedded memory, a reconfigurable datapath or an embedded PGA. Each of the satellite processors has its own autonomous controller, although the instruction set of most of these modules is very shallow. The microprocessor core configures the satellite processors and the communication network over the reconfiguration bus and manages the overall control flow of the application, either in a static compiled order or through a dynamic real-time kernel.

In view of the foregoing, it would be highly desirable to provide a single wireless communication device that can efficiently and cost-effectively support multiple wireless communication standards and applications.

### SUMMARY OF THE INVENTION

A digital wireless communication device comprises a software-programmable processor, a heterogeneous reconfigurable multiprocessing logic circuit, and a bus connecting the software-programmable processor and the heterogeneous reconfigurable multiprocessing logic circuit. The software-programmable processor is selected from the group comprising: a digital signal processor and a central processing unit. The heterogeneous reconfigurable multiprocessor comprises a set of heterogeneous signal processing kernels and a reconfigurable data router interconnecting the heterogeneous signal processing kernels. The signal processing kernels and data router are controlled by the software-programmable processor via control busses. The design of the heterogeneous reconfigurable multiprocessor is aided by an analysis method referred to as profiling.

The invention establishes a new architecture for multiple-service, multiple-standard digital communication devices. The platform enables the same hardware resources to be reconfigured in order to provide more flexible delivery of arithmetic and control operations via techniques of heterogeneous reconfigurable multiprocessing. The architecture is reprogrammable through the control of software resident on or downloaded into memory, which may be used by the microprocessor, digital signal processor, or heterogeneous reconfigurable multiprocessing logic. The architecture facilitates new, broadband services over a wireless or wired communication network on a single hardware platform at the base station (infrastructure end) or the user terminal (consumer terminal end).

The invention provides a communication apparatus that can operate over a plurality of telecommunication physical layer standards, radio frequency bands, data-rates, and user-programmed or network-programmed services. The functionality of a device constructed in accordance with the invention is defined as a set of software modules, each including a combination of "personalities" for the hardware devices of the apparatus. The software modules comprise object code that executes on a microprocessor, a digital signal processor, or on a heterogeneous reconfigurable multiprocessing logic module. The invention enables the use of a single hardware platform to operate over a variety of bands, standards, and data rates, while delivering a variety of user-programmed or network-programmed services. Furthermore, the invention can be reconfigured in the factory or field through various means including but not limited to factory/point-of-sale programming, remote control, and over-the-air or over-the-network download.

Thus, the invention significantly reduces the number of product platforms required to span a large product offering space for the wired or wireless communication market.

### BRIEF DESCRIPTION OF THE DRAWINGS

For a better understanding of the invention, reference should be made to the following detailed description taken in conjunction with the accompanying drawings, in which:
FIGURE 1 illustrates a digital communication modem that may be implemented in accordance with the prior art.
FIGURE 2A illustrates an architecture used to implement a prior art digital communication modem.
FIGURE 2B illustrates a control strategy used to implement a prior art digital communication modem.
FIGURE 3 illustrates the Energy-flexibility Gap associated with the prior art.
FIGURE 4A illustrates a reconfigurable digital wireless communication device in accordance with an embodiment of the invention.
FIGURE 4B illustrates a reconfiguration/control methodology used in conjunction with a reconfigurable digital wireless communication device of the invention.
FIGURE 5 illustrates the energy-flexibility characteristic of heterogeneous reconfigurable multiprocessing hardware constructed in accordance with the invention.
FIGURE 6 illustrates the application of heterogeneous reconfigurable multiprocessing hardware of the invention to a communication system.
FIGURE 7 illustrates a heterogeneous reconfigurable multiprocessing hardware architecture in accordance with an embodiment of the invention.
FIGURE 8 illustrates a detailed embodiment of the architecture of Figure 7.
FIGURE 9A illustrates a Reconfigurable Data Processing Kernel in accordance with an embodiment of the invention.
FIGURE 9B illustrates configurable architectures that may be formed in accordance with an embodiment of the invention.
FIGURE 10 illustrates profiling of computationally intensive functions in accordance with an embodiment of the invention.
FIGURE 11 illustrates profiling commonality of functions across standards in accordance with an embodiment of the invention.
FIGURE 12 illustrates the characterization of data processing kernels with variable and invariant components in accordance with an embodiment of the invention.
FIGURE 13 illustrates profiling data flow among data processing kernels in accordance with an embodiment of the invention.
FIGURE 14 illustrates the method of configuring one or more products in accordance with an embodiment of the invention.

Like reference numerals refer to corresponding parts throughout the drawings.

### DETAILED DESCRIPTION OF THE INVENTION

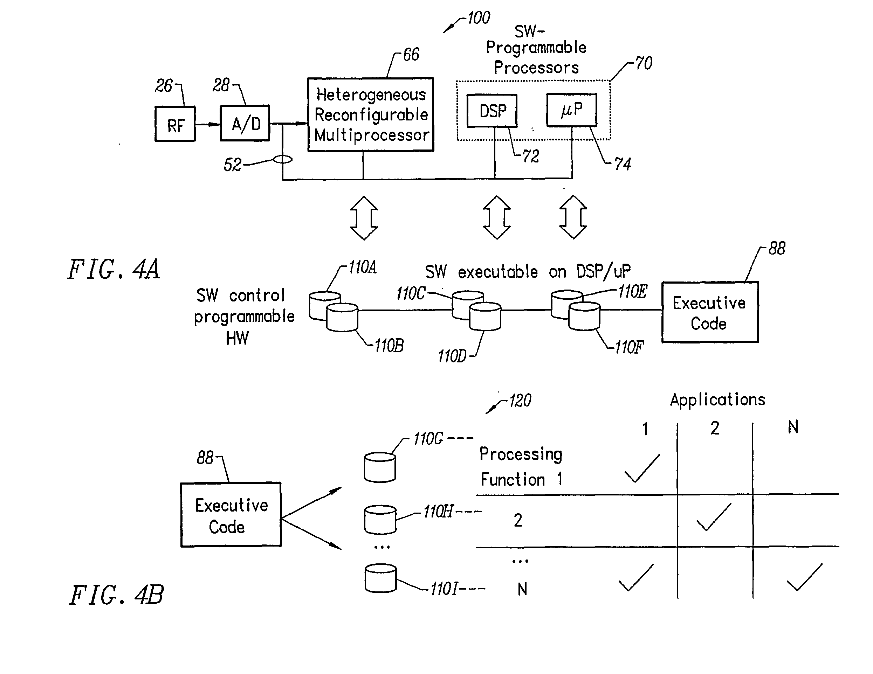

The efficiency of a multi-standard device may be dramatically improved via a new implementation architecture shown in Figure 4A. The new architecture also utilizes an RF subsystem 26 to provide one or more intermediate frequency signals, and an analog-to-digital converter 28, whose output is placed on bus 52. Signals from bus 52 are routed to heterogeneous reconfigurable hardware multiprocessor 66 and software programmable processors 70. In this embodiment, processors 70 include DSP microprocessor 72 and control microprocessor 74. The new architecture exploits heterogeneous reconfigurable multiprocessor 66, which includes a pool of parallel heterogeneous hardware signal processors referred to as signal processing kernels. The kernels perform the more computationally intensive signal processing operations of a set of standards, applications and services of interest, and are selected and configured in a modular, non-redundant manner. The individual signal processing kernels and their interconnections can be quickly reconfigured, so that device 100 can quickly switch from one standard, application, and/or service of interest to another. DSP 72 performs the less computationally intensive signal processing functions, while microprocessor 74 performs control and other functions. A communication bus 52 links microprocessor 74, digital signal processor 72, and heterogeneous reconfigurable multiprocessing hardware 66. Each hardware device is controlled by a corresponding software module 110.

The communication apparatus of the invention can change its function temporally via a mechanism that is under software control. Figure 4B illustrates the executive code 88 and software modules 110 of the invention operating in connection with the hardware platform 100 of Figure 4A. As shown in Figures 4A-B, selected software modules 110 execute on different hardware components. Thus, for example, software kernels 110A-B are executed on heterogeneous reconfigurable multiprocessing hardware 66, software kernels 110C-D are executed on the digital signal processor 72, and software kernels 110E-F are executed on the microprocessor 74. Executive code 88 further facilitates the management of the dataflow into and out of heterogeneous reconfigurable multiprocessor 66, as well as the functionality of heterogeneous reconfigurable multiprocessor 66. Thus, all the dataflow and control flow of all computational resources may be controlled and reconfigured via a software-programmable engine.

The software modules 110 define a superset of signal processing and control functions required by the suite of standards, applications, and/or services of interest, in accordance with the matrix of Figure 4B. In one embodiment, the software modules 110 are platform-dependent, and are thus in the form of object code optimized for the platform under consideration. They reside either in the product platform memory or are downloadable over-the-network, over-the-air, on the manufacturing floor, or point-of-sale station. Typically, they are stored in a platform-dependent hierarchy matrix, wherein the hierarchy has the following form:
- Product-Platform X: **specifies constituent processor cores, buses, etc.
- Country of Operation: **specifies allowed subset of applications
- Frequency Band: **specifies allowed frequency band of operations
- Services: **specifies allowed services in a country
- Data-Rates: **specifies data-rate support capability

### Layer 1 Functionality

### Object code to download for platform

### Layer 2 Functionality

The apparatus of Figure 4A-B is preferably operated in the following manner. The country of operation, allowed frequency band, allowed services, allowed data rates, etc. for a device are specified. Software modules to support these specifications are then selected. The software modules are then downloaded to the device of Figure 4A. This may be accomplished over-the-air, over-the-network, on the manufacturing floor, or at a point-of-sale station. The software kernels are then tested on the device and the system is initialized for operation.

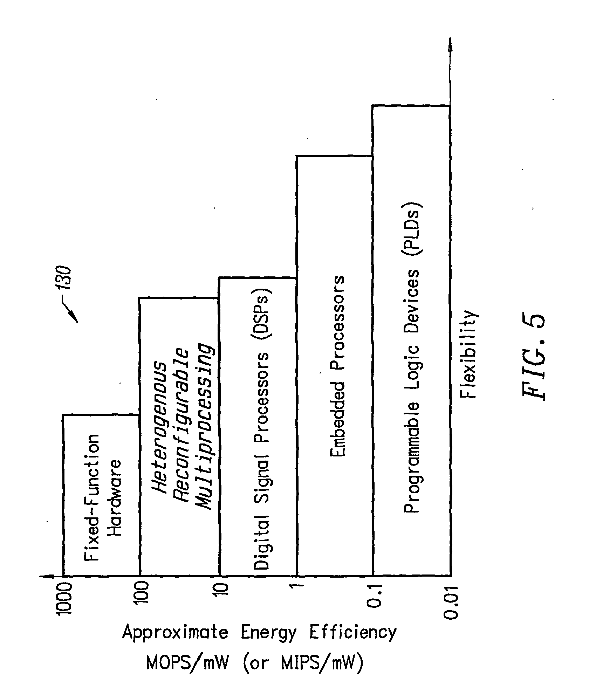

The resultant architecture and control strategy effectively fills the energy-efficiency gap 92 as shown in Figure 5. Although the heterogeneous reconfigurable multiprocessor does not attain the efficiency of fixed-function hardware due to the overhead of resources used for reconfiguration (i.e., to accommodate multiple services), this overhead is minimal relative to that of the more programmable/flexible devices shown. Digital signal microprocessors and embedded processors are much less efficient, due to the overhead of supporting instruction-set programmability. The efficiency of programmable logic devices is even lower, since they must employ a majority of resources to permit general, fine-grained reconfiguration that exceeds the needs of the application space accommodated by the invention.

The criteria used to map the requisite signal processing functions into the architecture of Figure 4A will vary, but will typically depend upon several key factors, including: power efficiency, memory requirements, throughput, latency, and flexibility. Function mapping will also rely upon product application space, multi-nation, multi-standard, or multi-service product operation requirements, product development time, and time-to-market requirements. Thus, the same hardware can be programmed and/or reconfigured to implement the same dataflow and control flow, but with a new set of parameters, that may be product quality-, channel-, standard-, service-, or country-of-operation-dependent.

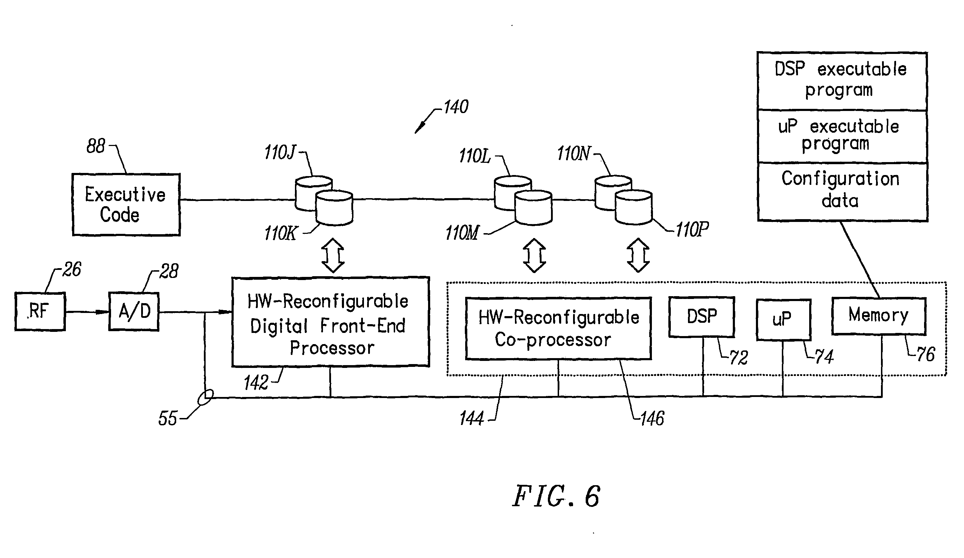

An example mapping of the Digital Front End Processor, Detector / Demodulator and Parameter Estimator of Figure 1 onto the architecture of Figure 4A is given in Figure 6. This figure illustrates a digital communication modem 140 that may be implemented in accordance with an embodiment of the invention. A transmitter transmits a signal to a channel, which may be a wireless or physical channel. The transmitted signal is received at the modem 140, where it is initially processed by a Radio Frequency (RF) subsystem 26. The RF subsystem 26 performs analog mixing, analog filtering, and analog gain control functions. The analog signal from the RF subsystem 26 is then converted to an equivalent digital signal with the analog-to-digital converter 28.

The output from the RF subsystem 26 is one or more bandpass signals (intermediate frequency signals), which are then digitized by the analog-to-digital converter 28, which is typically implemented as a free-running analog-to-digital converter. The output from the analog-to-digital converter 28 is placed on a bus 55, which may be reconfigurable. Signals from the bus 55 are routed to the hardware-reconfigurable digital front-end processor 142. Preferably, the reconfigurable processor 142 is implemented with a heterogeneous reconfigurable multiprocessor as discussed above.

The reconfigurable digital front-end processor 142 performs channel selection, sample-rate conversion, digital down-conversion, and digital filtering. This is achieved through the use of multi-rate digital signal processing techniques, software-programmable filter coefficients, rate-conversion, channelization, and loop filter parameters. The output of reconfigurable processor 142 consists of complex IQ signals, which are then fed to a demodulation-detection-parameter estimation processor 144. The functionality of processor 144 is distributed between the software-programmable digital signal processor 72, the control microprocessor 74, and the hardware-reconfigurable co-processor 146.

Processor set 144 performs demodulation/detection functions including but not limited to despreading, descrambling, dechannelizing, searching, and integrate-and-dump detection. Processor 144 also performs parameter estimation functions including but not limited to channel estimation, correlation, pilot-signal searching, frequency-offset estimation, phase-offset estimation, and timing-error estimation. Through a profiling methodology discussed below, highly computation-intensive aspects of parameter estimation are allocated to the hardware-reconfigurable co-processor 146, while the balance of computations is allocated to the DSP microprocessor 72 and control microprocessor 74. For example, in a code-division-multiple-access (CDMA) application, high-speed chip-rate processing is performed by co-processor 146, while lower-speed channel estimation is performed by DSP 72.

Co-processor 146 is architecturally distinct from processor 142 due to the autonomy of the respective signal processing functions, as well as differences in sample rates and other factors. The output from hardware-reconfigurable co-processor 146 is fed to the bus 55, which interfaces with the digital signal processor 72, control microprocessor 74, and memory 76. Memory 76 includes segments for the executable code for DSP 72, control microprocessor 74, and for hardware and other configuration. The digital signal processor 72 and microprocessor 74 are completely software programmable, and offer the most flexibility with respect to which applications can be executed on the architecture.

Processor 144 thus performs traditional inner receiver functions, which can be called via software routines from an instruction set processor. Thus, processor 144 is primarily software-programmable with requisite hardware reconfigurability, primarily with respect to dataflow between estimators and signal conditioning elements.

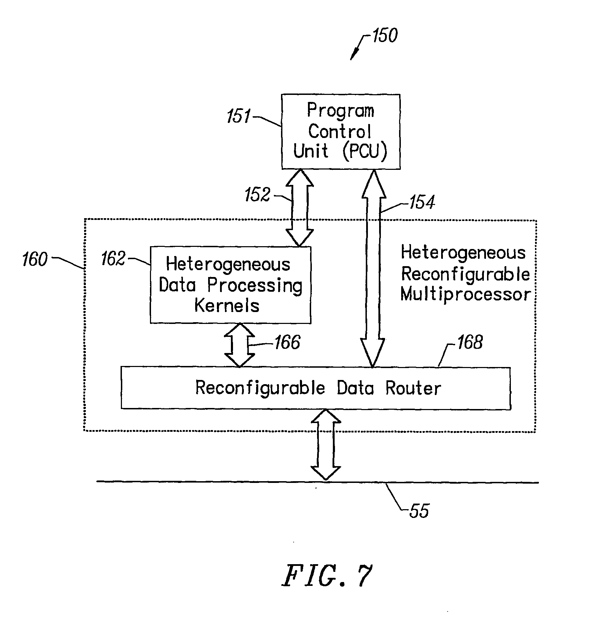

Figure 7 illustrates an architecture 150 in accordance with an embodiment of the invention. The architecture 150 includes a Program Control Unit (PCU) 151 which stores instructions and data. A heterogeneous reconfigurable multiprocessor 160 performs computationally intensive signal/data processing functions, and is representative of either the hardware-reconfigurable digital front-end processor 142, or of the hardware-reconfigurable co-processor 146 of Figure 6. The heterogeneous reconfigurable multiprocessor 160 is comprised of a set of heterogeneous data processing kernels 162 and a reconfigurable data router 168. The configuration of the heterogeneous data processing kernels 162 is determined by control bus 152, while the configuration of data router 168 is determined by control bus 154.

The data flow and control flow computation kernels 162 are of varying granularity, from simple arithmetic operators, such as adders and multipliers, to more complex data flow/control flow operations, such as a complete Viterbi Algorithm Add-Compare Select and Fast Fourier Transform Butterfly units. The composition of computation kernels 162 is further discussed below.

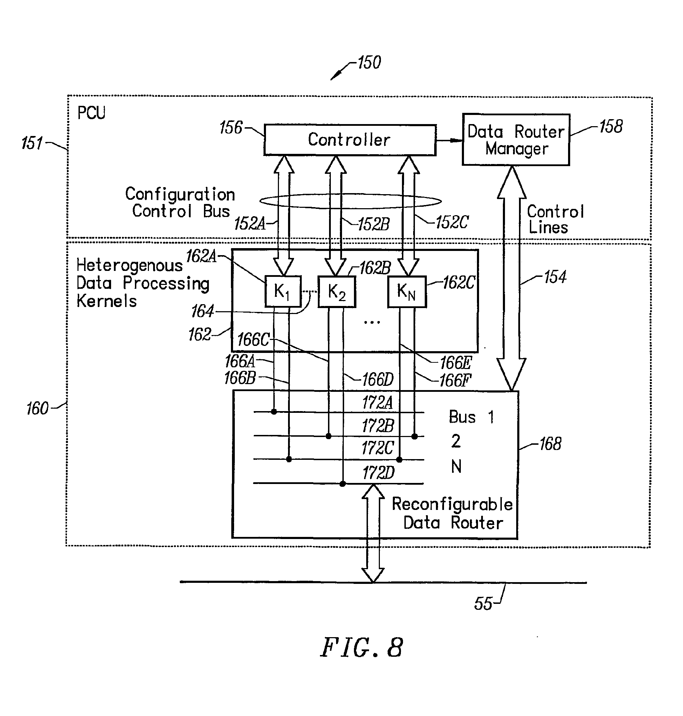

Figure 8 illustrates architecture 150 in greater detail. The PCU 151 receives a module of executive code 88 from microprocessor 74 of Figure 6. The executive code is a segment of the microprocessor executable programs stored in memory that orchestrates overall configuration and functionality. A controller 156 configures a set of quasi-fixed-function logic kernels 162A-C. In a typical application, the executive code 88 executes on the control microprocessor 74 or DSP microprocessor 72, and the functionality of controller 156 is allocated to the microprocessors and associated peripherals such as memory and various bus interfaces. Figure 8 further illustrates that individual kernels may be interconnected either directly, as per representative path 164, or via reconfigurable data router 168. Reconfigurable data router 168 further receives input data from and delivers output data to bus 55. Reconfigurable data router 168 is controlled by the data router manager 158 via control bus 154, and in turn via controller 156 and executive code 88 of Figure 4A.

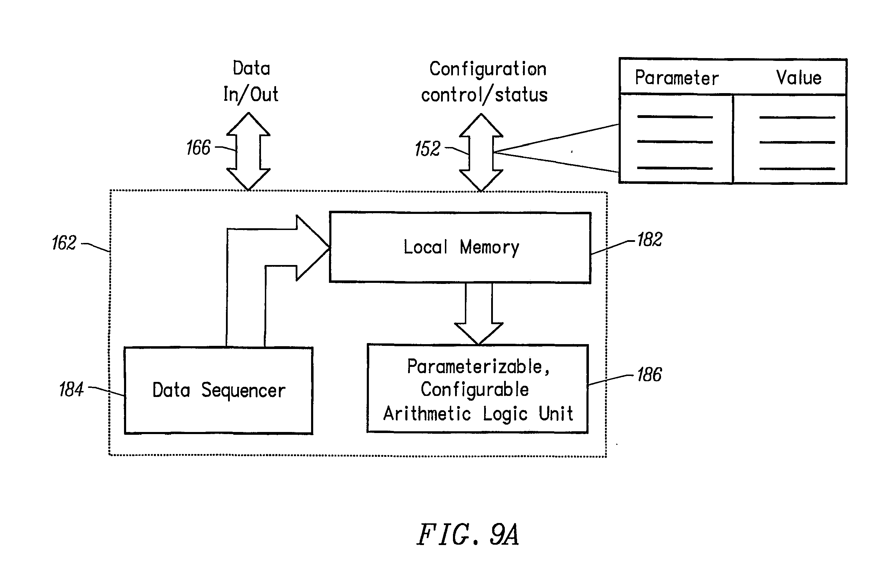

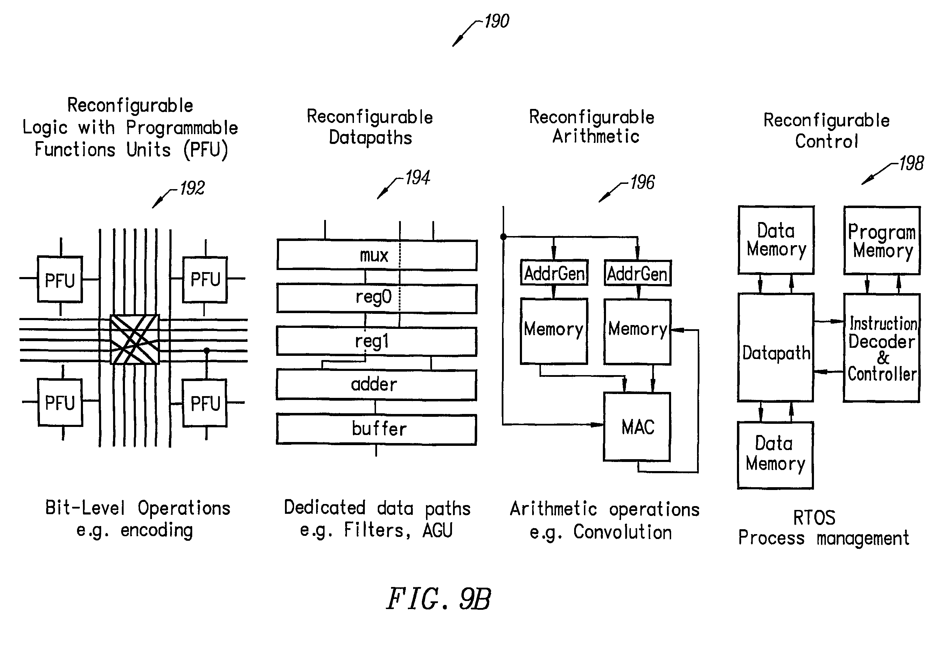

The portfolio of kernels 162 is determined by first profiling the applications of interest, as discussed below. Kernels 162 are compute engines, and their nature as well as that of their interconnection is governed by any bit-slice, nibble-slice, and word-slice routing control mechanism, including, but not limited to, a programmable bus. A preferred canonical architecture for the kernels 162 is depicted in Figure 9A. A configurable arithmetic logic unit (ALU) 186 performs the necessary signal processing operations. A local memory 182 serves as a high-speed cache. Data Sequencer 184 orchestrates the flow of data between local memory 182 and ALU 186. For further illustration, Figure 9B shows several representative or available configurable architectures that may be implemented by one or more kernels 162. Kernels 162 can be reconfigured via control lines 152 to determine what operations are possible. Similarly, the reconfigurable data router 168 of Figure 8 can be controlled to effectively re-order the sequence of signal processing operations performed by kernels 162.

Processor 160 can be reconfigured on a time-scale optimal for the application. For example, the mobile terminal of a user who roams from one geographic region to another having a different radio standard may be required to reconfigure over a period of seconds or minutes. On the other hand, the mobile terminal of a user who requests a real-time change of service, e.g., videoconference following from a voice connection with a common party, may be required to reconfigure in milliseconds or faster.

During execution, the architecture 160 operates as a heterogeneous (since the processors are not identical) multiprocessing (since there are multiple processing units) machine, with at least two concurrently operating processing units. Based on the selection of kernels 162, an augmented instruction set is defined for the heterogeneous reconfigurable multiprocessor 160. This augmented instruction set can be created, for example, by using a wide-word instruction by appending bits to an existing instruction word, with the new bit fields exclusively devoted to the decoding of instructions for the control and data flow for the heterogeneous reconfigurable multiprocessor. The instruction word, when decoded, feeds control units 156 and 158 of Figure 8. Controller 156 performs the role of taking the decoded instruction fields and configuring the kernels 162 and reconfigurable data router 168, via data router manager 158. The control of the reconfigurable data router 168 is effected via a control word, which, in a preferred implementation, is a bit field extracted from the instruction word.

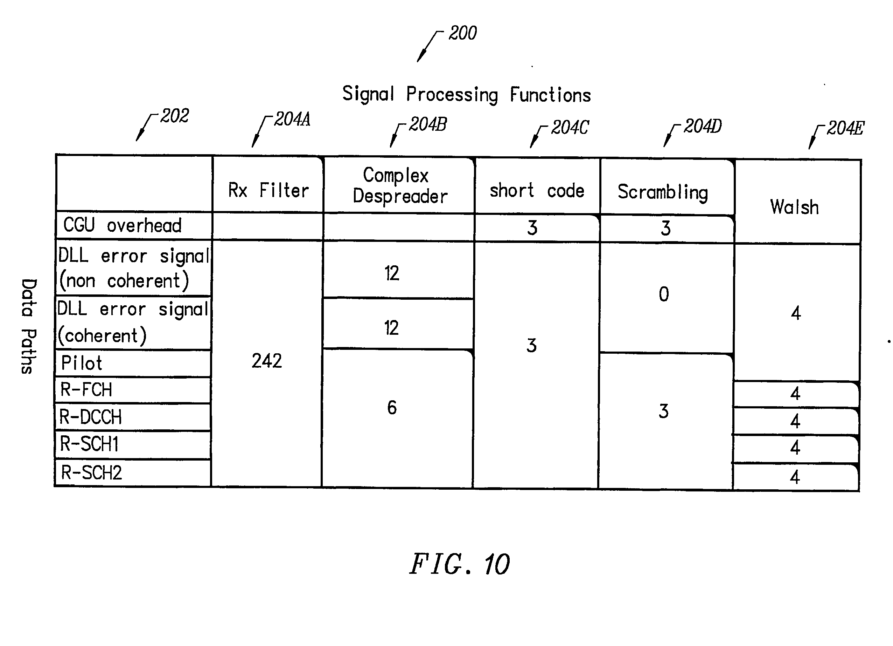

The heterogeneous reconfigurable multiprocessor 160 is designed according to a method referred to as profiling. Profiling includes the first step of surveying all signal processing and control functions required to accommodate the standards, applications, and/or services of interest. The most computationally intensive of these functions are then targeted to the heterogeneous reconfigurable multiprocessor 160, while the remaining functions are targeted to the DSP microprocessor 72. Typically, computational intensity is enumerated in units of millions of operations per second (MOPS). For example, Figure 10 depicts function 204A which could be provided by the hardware reconfigurable processor 142, functions 204 B-E to be provided by coprocessor 146, and corresponding MOPS required by each function 204. These metrics are calculated for the various pertinent signal processing datapaths.

Additionally in this step, computationally intensive functions are further categorized according to type of operation, e.g., arithmetic/logical, control, and memory access. For each category, characteristic power per MOPS is determined for hardware or software implementation from vendor data, analysis, or other means. Power, e.g., milliwatts, required per function is thereby characterized for implementation in both reconfigurable hardware or in software (i.e., running on a processor whose power-per-MOPS has been characterized). In addition, the corresponding code size (and therefore memory requirement) for software implementation is determined. From the above, and from budgeted power and memory resources, allocation of processing operations to hardware and software processors can be determined.

The entries in spreadsheet 200 correspond to static operation for a particular standard, i.e., to a specific time within a dynamic operational scenario. The analysis of Figure 10 must be repeated as necessary to reflect important temporal variations during representative/ realistic scenarios for all standards, applications, and/or services of interest. The results of these analyses must be interpreted to reveal additional critical metrics of computational intensity, including for example but not restricted to average and peak MOPS for each relevant operation. This enables the requisite specifications for the hardware and software processing resources to be further evaluated.

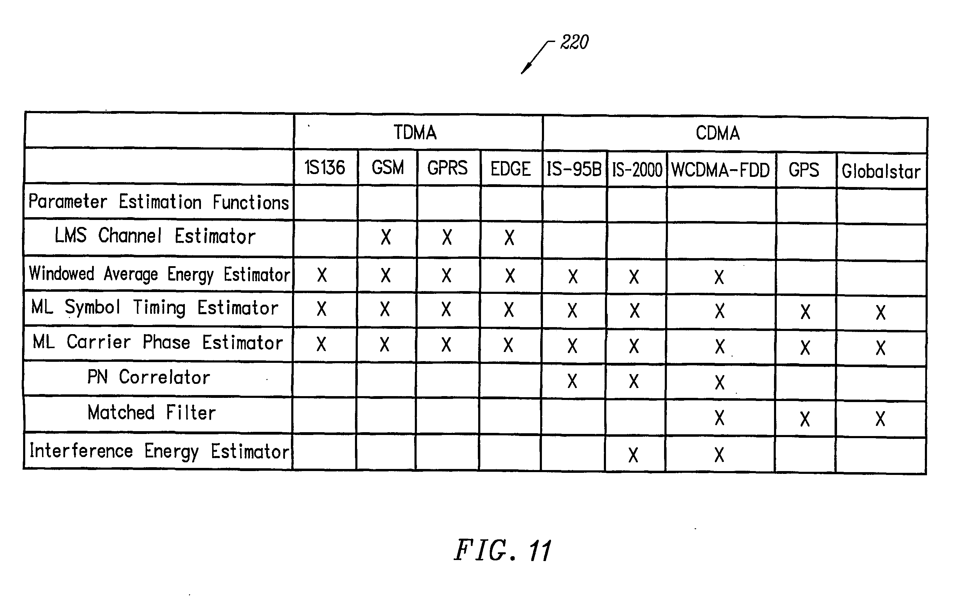

The second step of profiling involves analysis of commonality of signal processing functions across the standards, applications, and/or services of interest. This is represented by example in Figure 11. Included in abridged spreadsheet 220 are representative standards/ applications, and respective relevant signal processing functions within the general category of parameter estimation. Figure 11 shows, for example, that a Windowed Average Energy Estimator is required by seven of the listed standards. The designer would research the respective requirements of each of these seven standards to determine the required superset and seven subsets of functionality.

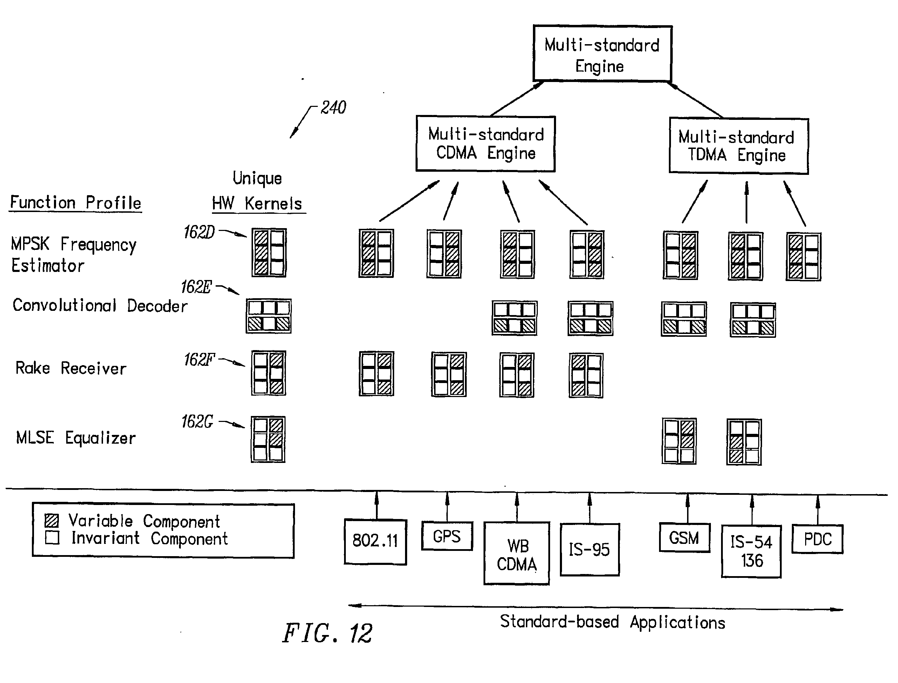

The third profiling step, defining the data processing kernels necessary to serve the standards, applications, and/or services of interest, is shown conceptually in Figure 12 for a different set of standards. In general, each unique type of kernel includes a combination of variable and invariant functionality. The invariant component is determined by the above steps to be common across the standards, applications, and/or services of interest, while the variable functionality is that determined necessary to adapt to the various standards, applications, and/or services of interest. Each kernel is designed to include sufficient control and interface functionality to permit reconfiguration according to the end operational scenario.

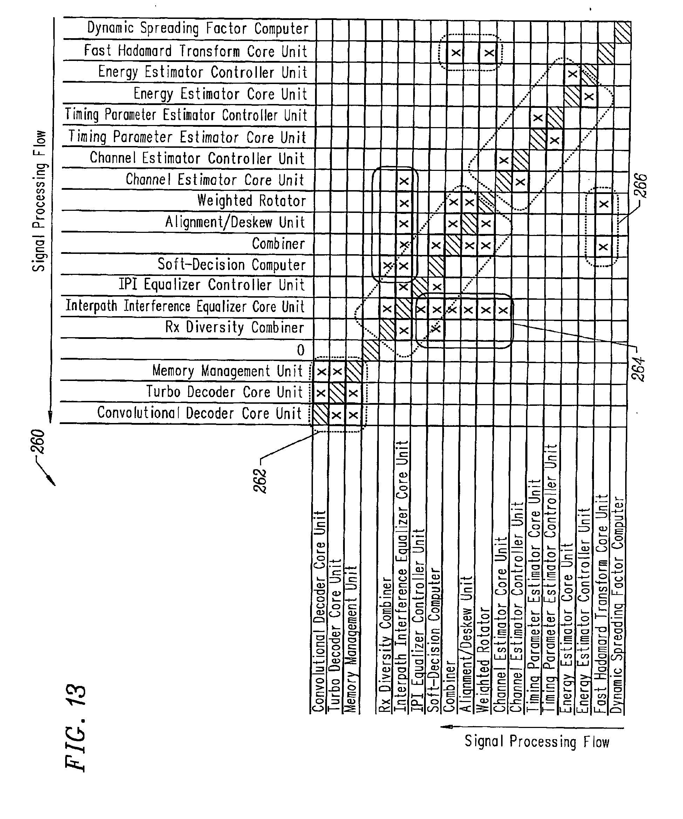

The interconnection of kernels must also be determined from profiling as shown in the example abridged matrix 260 of Figure 13. The rows and columns of matrix 260 show a representative set of hardware signal processing kernels that have been defined according to the above profiling steps, along with all connections necessary to serve a representative set of CDMA-based wireless communication standards. Along the axes of matrix 260, signals generally flow from bottom to top, or from right to left, with exceptions as indicated. Each cell containing an "X" represents a required interface between the respective kernels. It can be seen that in the vicinity of the diagonal, interconnections are tightly clustered, as for example cluster 262. Other types of interconnections include parallel connections, e.g., 264, and isolated connections, e.g., 266. Where common across all standards, applications, and/or services of interest, these interconnections are made directly, as represented by connection 164 of Figure 8. Conversely, connections that must change as a function of standard etc. must be effected by the reconfigurable data router 168 of Figure 8.

This analysis reveals certain considerations of interest to the implementation designer. For example, in matrix 260, cluster 262 indicates short connections in the silicon implementation, while cluster 266 indicates longer connections. Cluster 264 indicates a set of parallel connections.

To summarize, reconfiguration of multiprocessor 160 is effected by i) selection of hardware processing kernel types, ii) control of the variable kernel functionality, and iii) control of the reconfigurable data router 168.

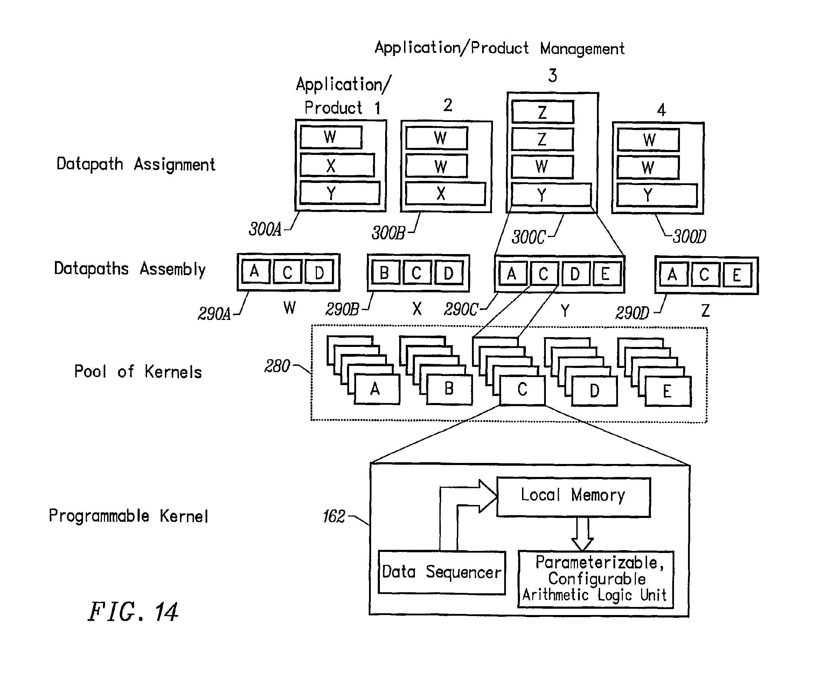

Once the kernel types and interconnections have been determined, the multiplicity of each kernel type needs to be determined, as illustrated in Figure 14. A kernel pool 280 includes a sufficient number of each type of kernel to permit the assembly of multiple datapaths 290. In turn, a sufficient multiplicity of datapaths 290 is assembled to accommodate the signal processing requirements of a particular standard, service or application. This is illustrated for a number of representative applications and/or products 300. The portfolio 300A-D can represent either a single product having multi-mode/standard /application capability, or multiple, separate products based on common underlying hardware and software resources.

Thus, a manufacturer can enjoy mass customization based on a common product "platform." Initial or subsequent configuration can be performed in the factory, at point-of-sale, or by the user after delivery. Post-delivery customization can be based upon any of a number of techniques, including but not limited to smart card, wired interface, and over-the-air/over-the-network download and billing.

In Figure 14, the various kernels 162 are interconnected by the reconfigurable data router 168 of Figures 7-8. For simplicity, however, reconfigurable data router 168 is not shown in Figure 14.

For convenience, the above discussion has utilized examples relating to wireless communication systems. The principles discussed apply directly to other applications including but not limited to multimedia, security, and networking. Furthermore, the receive path only has been illustrated; the apparatus and method of the invention apply directly to the transmit path.

Those skilled in the art will recognize a number of benefits associated with the disclosed architecture. The architecture provides the ability to reconfigure a single product platform for multiple standards, applications, services, and quality-of service, instead of developing multiple hardware platforms to establish the same collective functionality. The architecture also provides the ability to use software programming techniques to reduce product development time and achieve rapid and comprehensive product customization. Thus, new services can be provided via software upgrades. The apparatus of the invention allows a network operator or service provider to control a communication terminal's capabilities. Equipment manufacturers may exploit the invention to create software-defined communication appliances.

Advantageously, the architecture of the invention optimally combines fixed-function and reconfigurable logic resources. The system has reconfigurable control and data paths. The invention extends the performance efficiency of microprocessors and digital signal processors via the augmentation of data paths and control paths through a reconfigurable co-processing machine. The reconfigurability of the data path optimizes the performance of the data flow in the algorithms implemented on the processor.

The architecture efficiently redirects functions previously running on a Fixed Function Data Arithmetic Logic Unit to a more flexible Heterogeneous Reconfigurable Multiprocessing Unit. The invention does not depend upon the fine-grained reconfigurability of existing programmable logic devices, and so does not have the problem of such devices of the area and power of the chip being dominated by the routing resources. Furthermore, the invention does not substantially rely on instruction-set programmable processors. Instead, a quasi-fixed set of computational resources that span the signal processing requirements of the standards, applications, and/or services of interest are configured together in a reprogrammable manner. This architecture can be applied to implement signal processing and/or control of processing applications. Ideal applications include but are not limited to digital communication, networking, encryption/security, and multimedia applications.

The invention reduces product development time via the use of a reconfigurable processor that is programmable via a high-level language. This avoids the problem of having to create new processors each time the algorithms considered for new applications change or push the performance envelope of existing processor architectures. The invention enables mass customization of relevant consumer and infrastructure products.

The foregoing description, for purposes of explanation, used specific nomenclature to provide a thorough understanding of the invention. However, it will be apparent to one skilled in the art that the specific details are not required in order to practice the invention. In other instances, well-known circuits and devices are shown in block diagram form in order to avoid unnecessary distraction from the underlying invention. Thus, the foregoing descriptions of specific embodiments of the present invention are presented for purposes of illustration and description. The embodiments were chosen and described in order to best explain the principles of the invention and its practical applications, to thereby enable others skilled in the art to best utilize the invention and various embodiments with various modifications as are suited to the particular use contemplated. It is intended that the scope of the invention be defined by the following claims.

## Claims

1. A digital wireless communication device, comprising:
a radio-frequency (RF) subsystem (26);
an analog-to-digital converter (28);
a software-programmable processor (72, 74), wherein the software-programmable processor (72, 74) comprises a digital signal processor (72) or a central processing unit (74), and wherein said software-programmable processor (72, 74) executes a set of software modules specifying a set of wireless communication applications, standards or services to be implemented;
a heterogeneous reconfigurable multiprocessing logic circuit (66, 142, 146, 160), wherein said heterogeneous reconfigurable multiprocessing logic circuit (66, 142, 146, 160) comprises a plurality of programmable data processing kernels (162, 162A, 162B, 162C), wherein interconnections (164) between said programmable data processing kernels (162A, 162B) are made directly, where said interconnections (164) are common across all standards, applications and/or services of interest, wherein interconnections (166A-166F, 172A-172D) between said programmable data processing kernels (162A, 162B) that must change as a function of standards, applications and/or services of interest are effected by a reconfigurable data router (168), wherein the plurality of programmable data processing kernels (162, 162A, 162B, 162C) are programmed to implement a set of wireless communication applications, standards or services, and wherein the plurality of programmable data processing kernels (162, 162A, 162B, 162C) and the reconfigurable data router (168) are controlled by the software-programmable processor (72, 74); and
a bus (52, 55) connecting said software-programmable processor (72, 74) and said heterogeneous reconfigurable multiprocessing logic circuit (66, 142, 146, 160).

2. The digital wireless communication device of claim 1 wherein each data processing kernel (162, 162A, 162B, 162C) of said plurality of data processing kernels (162, 162A, 162B, 162C) including a data sequencer (184), a local memory (182), and an arithmetic logic unit (186).

3. A method of programming a digital wireless communication device (100, 140) according to one of the claims 1 to 2 to support a wireless communication application, standard, and service, said method comprising the steps of:
selecting a set of parameters and values required to implement a specified wireless communication application, standard, and service;
downloading said set of parameters and values to a digital wireless communication device (100, 140) including a heterogeneous reconfigurable multiprocessing logic circuit (66, 142, 146, 160) with a plurality of re-programmable data processing kernels (162, 162A, 162B, 162C); and
operating said plurality of re-programmable data processing kernels (162, 162A, 162B, 162C) in accordance with said set of parameter and values to support said specified communication application, standard, and service.

4. The method of claim 3 wherein said selecting step includes the step of selecting a set of parameters and values from the group comprising: a country of operation, a frequency band, and a data rate.

5. The method of claim 3 wherein said downloading step includes the step of downloading said set of parameters over a wireless communication channel.

6. The method of claim 3 wherein said downloading step includes the step of downloading said set of parameters at the time of manufacture.

7. The method of claim 3 wherein said downloading step includes the step of downloading said set of parameters at a point of sale.

## Patentansprüche

1. Eine digitale Drahtloskommunikationsvorrichtung, die folgende Merkmale aufweist:
ein Hochfrequenzuntersystem (26) (HF-Untersystem);
einen Analog-zu-Digital-Wandler (28);
einen softwareprogrammierbaren Prozessor (72, 74), wobei der softwareprogrammierbare Prozessor (72, 74) einen Digitalsignalprozessor (72) oder eine zentrale Verarbeitungseinheit (74) aufweist und wobei der softwareprogrammierbare Prozessor (72, 74) einen Satz von Softwaremodulen ausführt, die einen Satz von Drahtloskommunikationsanwendungen, -Standards oder -Diensten spezifizieren, die implementiert werden sollen;
eine heterogene rekonfigurierbare Mehrfachverarbeitungslogikschaltung (66, 142, 146, 160), wobei die heterogene rekonfigurierbare Mehrfachverarbeitungslogikschaltung (66, 142, 146, 160) eine Mehrzahl von programmierbaren Datenverarbeitungskernen (162, 162A, 162B, 162C) aufweist, wobei Verbindungen (164) zwischen den Datenverarbeitungskernen (162A, 162B) direkt hergestellt sind, wobei die Verbindungen (164) über alle interessierenden Standards, Anwendungen und/oder Dienste üblich sind, wobei Verbindungen (166A - 166F, 172A - 172D) zwischen den programmierbaren Datenverarbeitungskernen (162A, 162B), die sich in Abhängigkeit von interessierenden Standards, Anwendungen und/oder Diensten verändern müssen, durch einen rekonfigurierbaren Datenrouter (168) bewirkt sind, wobei die Mehrzahl von programmierbaren Datenverarbeitungskernen (162, 162A, 162B, 162C) programmiert ist, um einen Satz von Drahtloskommunikationsanwendungen, -Standards oder -Diensten zu implementieren, und wobei die Mehrzahl von programmierbaren Datenverarbeitungskernen (162, 162A, 162B, 162C) und der rekonfigurierbare Datenrouter (168) durch den softwareprogrammierbaren Prozessor (72, 74) gesteuert sind; und
einen Bus (52, 55), der den softwareprogrammierbaren Prozessor (72, 74) und die heterogene rekonfigurierbare Mehrfachverarbeitungslogikschaltung (66, 142, 146, 160) verbindet.

2. Die digitale Drahtloskommunikationsvorrichtung gemäß Anspruch 1, bei der jeder Datenverarbeitungskern (162, 162A, 162B, 162C) der Mehrzahl von Datenverarbeitungskernen (162, 162A, 162B, 162C) einen Datensequenzierer (184), einen lokalen Speicher (182) und eine Arithmetik-Logik-Einheit (186) umfasst.

3. Ein Verfahren zum Programmieren einer digitalen Drahtloskommunikationsvorrichtung (100, 140) gemäß einem der Ansprüche 1 bis 2, um eine Drahtloskommunikationsanwendung, einen -Standard und einen -Dienst zu unterstützen, wobei das Verfahren folgende Schritte aufweist:
Auswählen eines Satzes von Parametern und Werten, die erforderlich sind, um eine spezifizierte Drahtloskommunikationsanwendung, einen -Standard und einen -Dienst zu implementieren;
Herunterladen des Satzes von Parametern und Werten zu einer digitalen Drahtloskommunikationsvorrichtung (100, 140), die eine heterogene rekonfigurierbare Mehrfachverarbeitungslogikschaltung (66, 142, 146, 160) mit einer Mehrzahl von reprogrammierbaren Datenverarbeitungskernen (162, 162A, 162B, 162C) umfasst; und
Betreiben der Mehrzahl von reprogrammierbaren Datenverarbeitungskernen (162, 162A, 162B, 162C) gemäß dem Satz von Parametern und Werten, um die spezifizierte Kommunikationsanwendung, den -Standard und den -Dienst zu unterstützen.

4. Das Verfahren gemäß Anspruch 3, bei dem der Auswahlschritt den Schritt eines Auswählens eines Satzes von Parametern und Werten aus der Gruppe umfasst, die Folgendes aufweist: ein Betriebsland, ein Frequenzband und eine Datenrate.

5. Das Verfahren gemäß Anspruch 3, bei dem der Herunterladeschritt den Schritt eines Herunterladens des Satzes von Parametern über einen Drahtloskommunikationskanal umfasst.

6. Das Verfahren gemäß Anspruch 3, bei dem der Herunterladeschritt den Schritt eines Herunterladens des Satzes von Parametern zu der Herstellungszeit umfasst.

7. Das Verfahren gemäß Anspruch 3, bei dem der Herunterladeschritt den Schritt eines Herunterladens des Satzes von Parametern an einer Verkaufsstelle umfasst.

## Revendications

1. Dispositif de communication sans fil numérique, comprenant:
un sous-système à radiofréquence (RF) (26);
un convertisseur analogique-numérique (28);
un processeur programmable par logiciel (72, 74), où le processeur programmable par logiciel (72, 74) comprend un processeur de signal numérique (72) ou une unité de traitement centrale (74), et où ledit processeur programmable par logiciel (72, 74) exécute un ensemble de modules de logiciel spécifiant un ensemble d'applications de communication sans fil, de normes ou de services à mettre en oeuvre;
un circuit logique de multitraitement reconfigurable hétérogène (66, 142, 146, 160), où ledit circuit logique de multitraitement reconfigurable hétérogène (66, 142, 146, 160) comprend une pluralité de noyaux de traitement de données programmables (162, 162A, 162B, 162C), où les interconnexions (164) entre lesdits noyaux de traitement de données programmables (162A, 162B) sont effectuées directement, où lesdites interconnexions (164) sont communes à toutes les normes, applications et/ou services d'intérêt, où les interconnexions (166A-166F, 172A-172D) entre lesdits noyaux de traitement de données programmables (162A, 162B) qui doivent changer en fonction des normes, applications et/ou des services d'intérêt sont effectuées par un routeur de données reconfigurable (168), où la pluralité de noyaux de traitement de données programmables (162, 162A, 162B, 162C) sont programmés pour mettre en oeuvre un ensemble d'applications de communication sans fil, de normes ou de services, et où la pluralité de noyaux de traitement de données programmables (162, 162A, 162B, 162C) et le routeur de données reconfigurable (168) sont commandés par le processeur programmable par logiciel (72, 74); et
un bus (52, 55) connectant ledit processeur programmable par logiciel (72, 74) et ledit circuit logique de multitraitement reconfigurable hétérogène (66, 142, 146, 160).

2. Dispositif de communication sans fil numérique selon la revendication 1, dans lequel chaque noyau de traitement de données (162, 162A, 162B, 162C) de ladite pluralité de noyaux de traitement de données (162, 162A, 162B, 162C) comporte un séquenceur de données (184), une mémoire locale (182), et une unité logique arithmétique (186).

3. Procédé de programmation d'un dispositif de communication sans fil numérique (100, 140) selon l'une des revendications 1 à 2 pour supporter une application de communication sans fil, une norme, et un service, ledit procédé comprenant les étapes consistant à:
sélectionner un ensemble de paramètres et de valeurs requis pour mettre en oeuvre une application de communication sans fil, une norme, et un service spécifiés;
télécharger ledit ensemble de paramètres et de valeurs vers un dispositif de communication sans fil numérique (100, 140) comportant un circuit logique de multitraitement reconfigurable hétérogène (66, 142, 146, 160) avec une pluralité de noyaux de traitement de données reprogrammables (162, 162A, 162B, 162C); et
faire fonctionner ladite pluralité de noyaux de traitement de données reprogrammables (162, 162A, 162B, 162C) selon ledit ensemble de paramètres et de valeurs pour supporter lesdits application de communication, norme et service spécifiés.

4. Procédé selon la revendication 3, dans lequel ladite étape de sélection comporte l'étape consistant à sélectionner un ensemble de paramètres et de valeurs parmi le groupe comprenant: un pays de fonctionnement, une bande de fréquences, et un débit de données.

5. Procédé selon la revendication 3, dans lequel ladite étape de téléchargement comporte l'étape consistant à télécharger ledit ensemble de paramètres via un canal de communication sans fil.

6. Procédé selon la revendication 3, dans lequel ladite étape de téléchargement comporte l'étape consistant à télécharger ledit ensemble de paramètres au moment de la fabrication.

7. Procédé selon la revendication 3, dans lequel ladite étape de téléchargement comporte l'étape consistant à télécharger ledit ensemble de paramètres à un point de vente.
